# EUROPÄISCHE PATENTSCHRIFT

(11) **EP 1 093 733 B1**
(45) Veröffentlichungstag und Bekanntmachung des Hinweises auf die Patenterteilung: **06.10.2004**
(21) Anmeldenummer: 00122710.7
(22) Anmeldetag: 18.10.2000
(51) Int. Cl.: A47B 77/00, A47B 17/02

(54) **Möbel**
Piece of furniture
Un meuble

(30) Priorität: 20.10.1999 DE 19950550
(43) Veröffentlichungstag der Anmeldung: 25.04.2001
(73) Patentinhaber: Dreier Küchensysteme GmbH & Co. KG, 85440 Haar (DE)
(72) Erfinder: Dreier, Horst, 85598 Baldham (DE)
(74) Vertreter: Manitz, Finsterwald & Partner Gbr

(56) Entgegenhaltungen:
- DE-U- 29 612 108
- DE-U- 29 720 976
- US-A- 3 595 180
- US-A- 5 531 168

## Beschreibung

Die Erfindung betrifft ein Möbel nach dem Oberbegriff des Anspruches 1.

Bei einem aus der WO 97/40720 bekannten Möbel werden sowohl die als seitliche Tragplatten ausgebildeten Vertikalträger als auch Einbauteile des Möbels mittels zweier an der Unterseite der Arbeitsplatte vorgesehener Längsnuten befestigt.

Aus der DE 297 20 976 U1 ist ein Arbeitsmöbel mit wenigstens einer vorderen Arbeitsebene und einer rückseitigen Arbeitsebene, mit Doppelstützenfüßen und mit einem Querträger bekannt, welcher die Doppelstützenfüße verbindet, wobei die vordere Arbeitsebene auf einem vorderen Vertikalprofil und die rückseitige Arbeitsebene auf einem rückseitigen Vertikalprofil der Doppelstützenfüße abgestützt und höhen- und neigungsverstellbar sind. Die rückseitige Arbeitsebene ist über Stützelemente und Tragelemente auf dem rückseitigen Vertikalprofil abgestützt und neigungsverstellbar angeordnet. An dem Vertikalprofil ist ein Stützelement im Bereich eines Befestigungsflansches befestigt, wobei im Bereich einer Längsnut, welche in einer rückwärtigen Kurzseite des Vertikalprofils ausgebildet ist, eine Fixierung erfolgt. Es sind Befestigungselemente, z.B. Befestigungsschrauben und in der Längsnut gehaltene Federmuttern vorgesehen. Eine etwa rechtwinklige Abwinklung des Befestigungsflansches soll eine gute Zugänglichkeit und Handhabung bei der Montage gewährleisten.

Die Aufgabe der Erfindung besteht darin, die Stabilität eines derartigen Möbels ohne aufwendige Maßnahmen zu verbessern.

Zur Lösung dieser Aufgabe sind die Merkmale des kennzeichnenden Teils des Patentanspruchs 1 vorgesehen.

Der Erfindungsgedanke ist also darin zu sehen, daß man eine zwei benachbarte seitliche Tragplatten verbindende Rückwand, die vorzugsweise im Bereich ihrer vier Ecken über die Schienenprofile fest mit den Tragplatten verbunden ist, gleichzeitig dazu ausnutzt, die seitliche Stabilität des Möbels deutlich zu verbessern. Zu diesem Zweck soll die Rückwand mit ihrem Oberrand so weit, wie es die Befestigungselemente zulassen, oben an den seitlichen Tragplatten angeordnet sein und sich nach unten zumindest über ein Drittel der Gesamthöhe der Tragplatten erstrecken.

Die Rückwand kann, muß aber nicht die gesamte oder den größten Teil der Höhenerstreckung der Rückseite des Möbels abdecken.

Bevorzugt ist das Profil nach Anspruch 2.

Besonders vorteilhafte bauliche Realisierungen des Befestigungselementes entnimmt man den Patentansprüchen 3 bis 7. Die Befestigungselemente sind also bevorzugt Winkelprofile, wobei der eine Schenkel das erfindungsgemäße Flachstück bildet, welches das eigentliche Verbindungsstück zwischen Tragplatten und Rückwand darstellt. Das sich senkrecht zur Rückwand bzw. der Rückseite der Tragplatte erstreckende Winkelstück erfüllt dagegen die Funktion einer Stabilisierung des Befestigungselementes sowie der Unterstützung der Halterung der Rückwand insbesondere an deren Unterrand. Eine bevorzugte Anordnung der Befestigungselemente ist im Anspruch 8 angegeben.

Weitere vorteilhafte Weiterbildungen der Erfindung sind durch die Patentansprüche 9 bis 21 gekennzeichnet.

Die Erfindung wird im folgenden beispielsweise anhand der Zeichnung beschrieben; in dieser zeigt:
- Figur 1: eine schematische Rückansicht eines erfindungsgemäßen Küchenmöbels mit einem unten an die Arbeitsplatte angebauten Schubladenkorpus, der die erfindungsgemäßen Befestigungselemente trägt, wobei der Anschaulichkeit halber die erfindungsgemäßen Befestigungselemente an den Tragplatten und die Rückwand fortgelassen sind,
- Figur 2: eine Rückansicht analog Figur 1, wobei jedoch eine Rückwand mittels vier erfindungsgemäßen Befestigungselementen angebaut ist,
- Figur 3: eine schematische Seitenansicht des Gegenstandes der Figur 2 von rechts,
- Figur 4: eine schematische Schnittansicht nach Linie IV-IV in Figur 2,
- Figur 5: eine schematische Schnittansicht nach Linie V-V in Figur 2,
- Figur 6: eine etwas vergrößerte teilgeschnittene Ansicht analog Figur 4 ohne eingebaute Rückwand und mit noch nicht festgezogenem Gleitstein,
- Figur 7: die gleiche Ansicht wie Figur 6, jedoch mit festgeschraubtem Gleitstein und
- Figur 8: eine Ansicht des Befestigungselementes nach den Figuren 6, 7 von vorne, d.h. von der Seite her, von der die dahinter angebrachte Rückwand festgeschraubt wird.

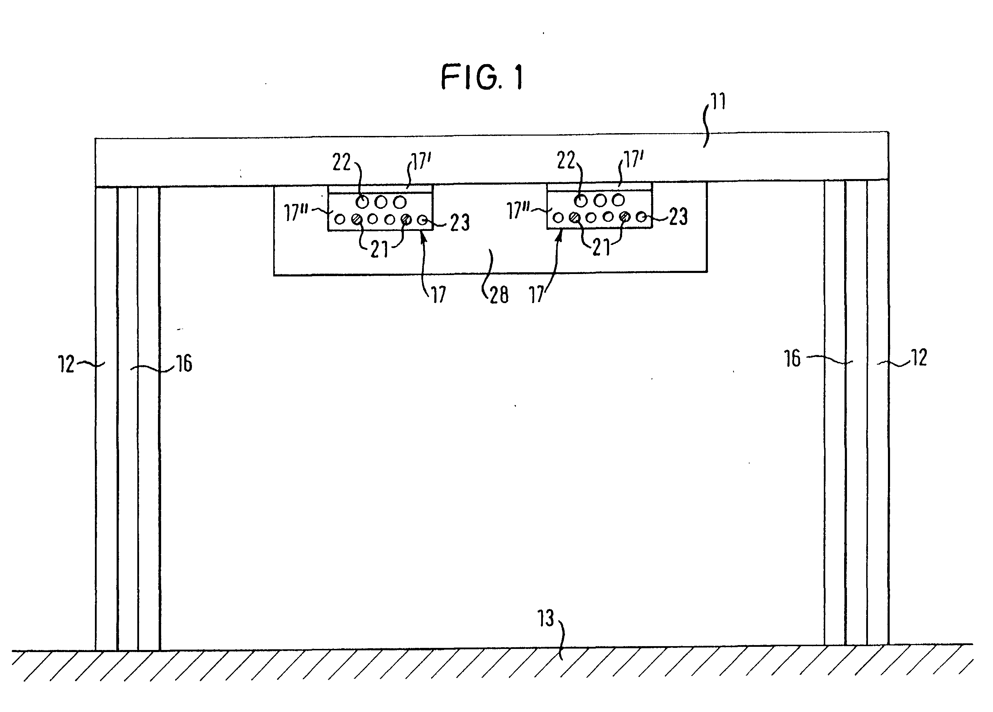

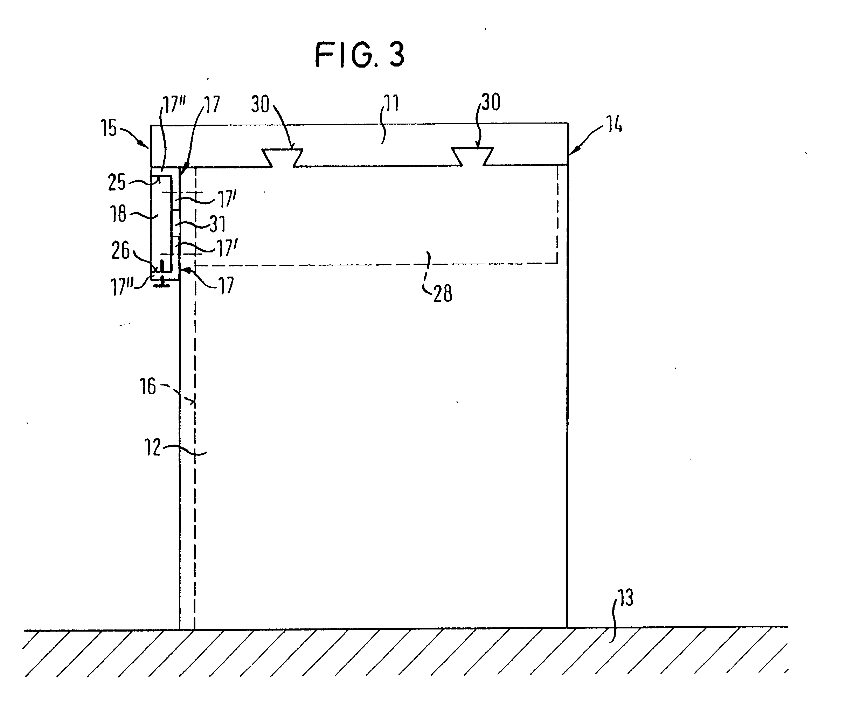

Nach den Figuren 1 und 3 sind auf dem Boden 13 einer Küche im seitlichen Abstand nebeneinander zwei Tragplatten 12 senkrecht und parallel zueinander angeordnet. Auf den Tragplatten 12 ruht eine rechteckige, horizontale Arbeitsplatte 11, die seitlich mit den Tragplatten 12 bündig ist und mit diesen bevorzugt über Längs-Schwalbenschwanznuten 30 so verbunden ist, wie das in Figur 3 nur angedeutet ist.

Erfindungsgemäß weisen die Tragplatten 12 auf ihrer Rückseite vertikale Schienenprofile in Form von Schwalbenschwanznuten 16 auf, die vom Boden 13 bis zur oben vorgesehenen Arbeitsplatte 11 durchgehen. Zwischen den Tragplatten 12 ist beispielsweise ein unter der Arbeitsplatte 11 in den Längsnuten 30 befestigter Schubladenkorpus 28 gezeigt, wobei die hintere obere Befestigung in den unterhalb der Arbeitsplatte 11 befindlichen Längsnuten der Arbeitsplatte 11 fortgelassen sein kann. Die betreffende Längsnut 30 kann in diesem Bereich ganz entfallen.

An der Rückwand des Schubladenkorpus 28 sind im Abstand nebeneinander zwei erfindungsgemäße Befestigungselemente 17 mit einem parallel zur Rückwand des Schubladenkorpus 28 verlaufenden Flachstück 17' und einem nach hinten vorstehenden Winkelstück 17" mittels Schrauben 21 befestigt, die durch Rückwand-Befestigungsbohrungen 23 hindurch in die Rückwand des Schubladenkorpus 28 eingeschraubt sind. Oberhalb der Rückwand-Befestigungsbohrungen 23 befinden sich Gleitstein-Befestigungsbohrungen 22, deren Sinn und Zweck weiter unten beschrieben wird.

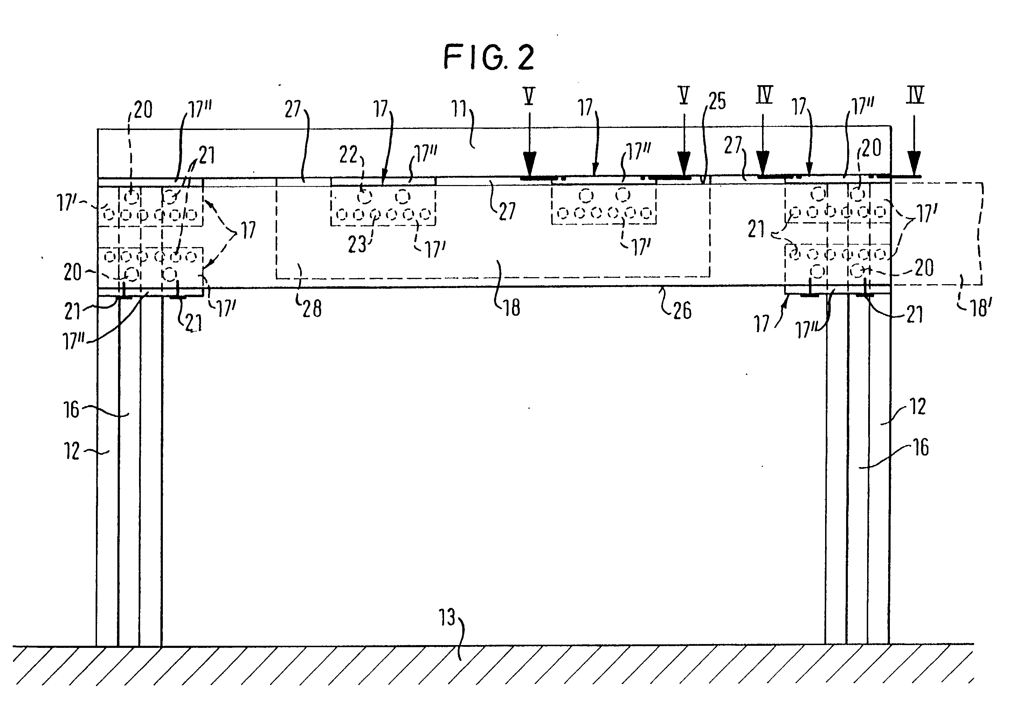

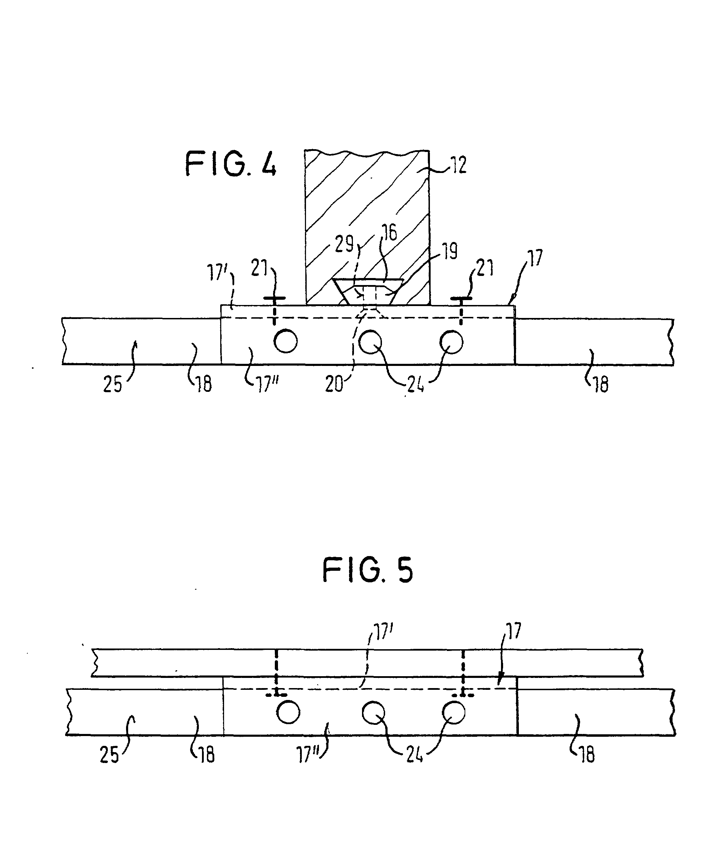

Nach Figur 2 und 3 ist im oberen Bereich der Tragplatten 12 unmittelbar unter der Arbeitsplatte 11 eine sich parallel zur Rückseite des Möbels erstreckende Rückwand 18 mittels an den Schwalbenschwanznuten 16 angebrachter Befestigungselemente 17 befestigt, wie sie im folgenden anhand der Figuren 4 bis 8 im einzelnen beschrieben werden.

Die erfindungsgemäßen Befestigungselemente 17 weisen nach Fig. 3, 6 bis 8 jeweils ein Flachstück 17' und ein demgegenüber um 90° abgewinkeltes Winkelstück 17" auf, so daß insgesamt ein 90°-Winkelprofil vorliegt. Nach den Figuren 2 und 6 bis 8 weist das Flachstück 17' nahe dem Winkelstück 17" drei im gleichen Abstand in Längsrichtung vorgesehene Gleitstein-Befestigungsbohrungen 22 und in größerem Abstand vom Winkelstück 17" sechs Rückwand-Befestigungsbohrungen 23 auf, die auf derjenigen Seite, von wo Befestigungsschrauben 21, 22 eingedreht werden, eingesenkt sind, um die Anwendung von Senkkopf-Schrauben zu ermöglichen, die bündig mit der Oberfläche des Flachstücks 17' sind.

Im Winkelstück 17" sind nebeneinander und im gleichen Abstand drei Stirnseiten-Befestigungsbohrungen 24 vorgesehen.

Wie aus den Figuren 4, 6 und 7 hervorgeht, ist in der Schwalbenschwanznut 16, die an der Rückseite bündig mit der Tragplatte 12 ist, für jedes Befestigungselement 17 ein Gleitstein 19 mit einer Gewindebohrung 29 vorgesehen, in den von der offenen Seite her eine Befestigungsschraube 20 eingedreht werden kann.

Erfindungsgemäß ist die Länge der Befestigungselemente 17 derart, daß es nach den Figuren 4, 6 und 7 mittels einer durch eine der Gleitstein-Befestigungsbohrungen 22 hindurchgeführten Befestigungsschraube 20, die in den Gleitstein 19 eingeschraubt wird, derart an der Rückseite der Tragplatte 12 befestigt werden kann, daß das Befestigungselement 17 auf wenigstens einer Seite der Tragplatte 12 um so viel von dieser vorsteht, daß dort eine von hinten an das Flachstück 17' angelegte Rückwand 18 von vorne her mitten durch das Innere des Möbels hindurch in die Rückwand-Befestigungsbohrungen 23 eingeschraubter Schrauben befestigt werden kann.

Um eine möglichst stabile Befestigung der Rückwand zu gewährleisten, sollen sich in dem von der Tragplatte 12 seitlich vorstehenden Stück des Befestigungselementes 17 zumindest zwei nebeneinanderliegende Rückwand-Befestigungsbohrungen 23 befinden, so daß die Rückwand 18 an jedem Befestigungselement 17 zumindest mittels zweier nebeneinander angeordneter Befestigungsschrauben 21 befestigt werden kann. In Figur 4 ist lediglich der Übersicht halber auf jeder Seite der Tragplatte 12 nur eine Befestigungsschraube 21 dargestellt. Nach Figur 4 steht das Winkelstück 17" vom Flachstück 17' nach hinten um den Betrag der Dicke der Rückwand 18 vor.

Während beim dargestellten Ausführungsbeispiel für jedes Flachstück 17" nur ein in der Schwalbenschwanznut 16 geführter Gleitstein 19 gezeigt ist, ist es grundsätzlich auch möglich, zur weiteren Verbesserung der Stabilität an jedem Flachstück 17' in geringem Abstand übereinander zwei Gleitstein-Befestigungsbohrungen 22 für zwei übereinander angeordnete Gleitsteine 19 vorzusehen.

Wesentlich ist, daß nach Figur 3 die Arbeitsplatte 11 auf der Rückseite 15 um die Breite des Winkelstücks 17" über die Rückseite der Tragplatte 12 vorsteht. Auf diese Weise wird an der Rückseite des Möbels Platz für die Anbringung der Winkel-Befestigungselemente 17 und die von diesen gehaltene Rückwand 18 geschaffen. Auf der Vorderseite ist die Arbeitsplatte 13 zweckmäßig bündig mit der Arbeitsplatte 11.

Die Dicke der Arbeitsplatte beträgt ca. 50 mm, die Dicke der Rückwand ca. 20 mm.

Weitere Merkmale und Einzelheiten der Erfindung ergeben sich aus der folgenden Funktionsbeschreibung:

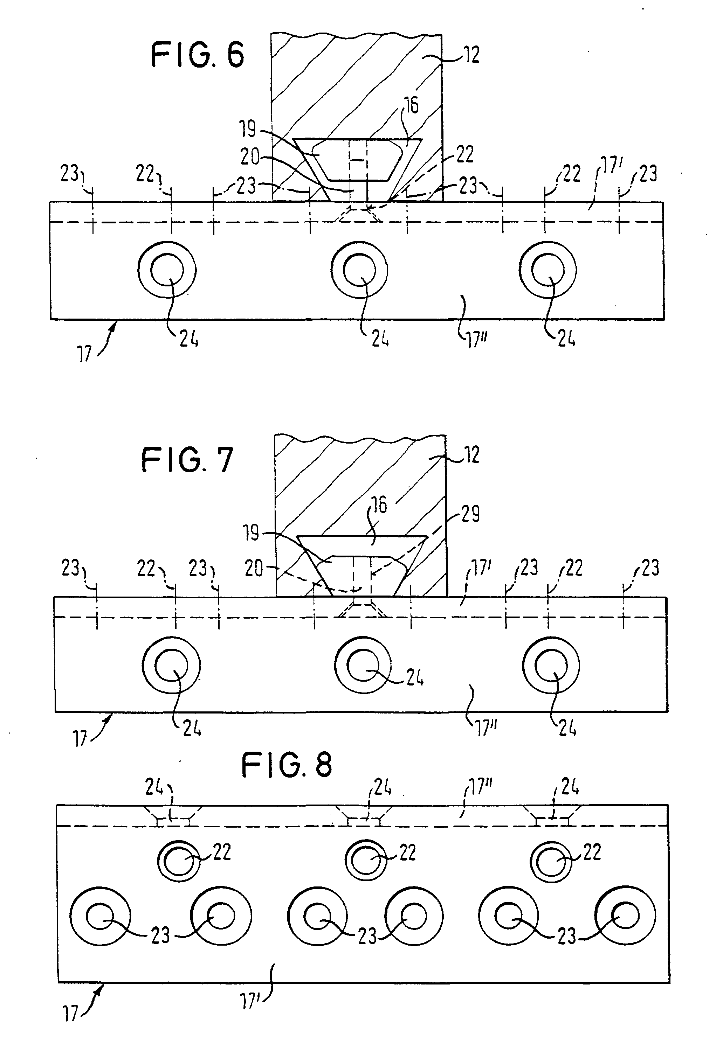

Um eine Rückwand 18 gemäß den Figuren 2 bis 4 zu befestigen, wird zunächst ein Winkel-Befestigungselement 17 gemäß den Figuren 6 und 7 an der Rückseite jeder Tragplatte 12 befestigt. Die Befestigungsschrauben 20 sind gemäß Figur 6 zunächst nicht angezogen, so daß das Winkel-Befestigungselement 17 auf eine gewünschte Höhe eingestellt werden kann. Sofern es sich um die oberen Befestigungselemente 17 handelt, werden diese bis zum Anschlag an die Unterseite der Arbeitsplatte 11 gemäß Figur 2 nach oben geschoben, wobei die sich von der Tragplatte 12 weg erstreckenden Bereiche zumindest im wesentlichen horizontal verlaufen. Sobald ein Befestigungselement 17 sich in der richtigen gewünschten Höhenposition befindet, wird die Befestigungsschraube 20 angezogen, so daß der Gleitstein 19 sich gemäß Figur 7 in der Schwalbenschwwanznut 16 verkeilt und damit das Befestigungselement 17 in der gewünschten Anordnung festlegt.

Die unteren Winkel-Befestigungselemente werden genau spiegelbildlich zu den oberen angeordnet, so daß sich dort die Flachstücke 17' vom Winkelstück 17" nach oben erstrecken. Die unteren Befestigungselemente 17 werden in der Höhe so eingestellt, daß zwischen die jeweils übereinanderliegenden Winkelstücke 17" eine rechteckförmige Rückwand 18 von der Länge der Arbeitsplatte 11 und gewünschter Höhe dazwischen eingesetzt werden kann.

Alle Winkelstücke 17" erstrecken sich von den zugeordneten Flachstücken 17' nach hinten, so daß die Rückwand 18 von hinten einzusetzen ist. Sobald dies geschehen ist, können von vorn, d.h. vom Inneren des Möbels her Befestigungsschrauben 21 in einige, mindestens zwei der Rückwand-Befestigungsbohrungen 23 eingeführt und in die Rückwand 18 so weit eingeschraubt werden, daß diese fest mit den Flachstücken 17' verbunden ist. Durch die gleichzeitige Anlage des Oberrandes 25 und des Unterrandes 26 an den oberen bzw. unteren Winkelstücken 17" wird die das gesamte Möbel stabilisierende Verbindung zwischen den Befestigungselementen 17 und der Rückwand 18 weiter gefördert.

Sofern gemäß Figur 2 nur zwei nebeneinander im Abstand angeordnete Tragplatten 12 vorgesehen sind, wird ein Befestigungselement 17 so ausgebildet bzw. angeordnet, daß es gemäß Figur 2 nur zu der jeweils gegenüberliegenden Tragplatte 12 weisenden Seite von der jeweiligen Tragplatte 12 vorsteht. Aufgrund der mehreren Gleitstein-Befestigungsbohrungen 22 können verschiedene Überstände der Befestigungselemente 17 realisiert werden.

Sollen zu beiden Seiten einer Tragplatte 12 Rückwände angeordnet sein (siehe 18' in Figur 2), so werden die Befestigungselemente 17 gemäß den Figuren 6 und 7 so angeordnet, daß sie zu beiden Seiten von der Tragplatte 12 vorstehen. Auf diese Weise können zwei Rückwände 18, 18', aber auch eine durchgehende Rückwand an den Tragplatten 12 angeordnet werden.

Nach den Figuren 2 und 3 verbleiben aufgrund der erfindungsgemäßen oberen Befestigungselemente 17 zwischen der unteren Fläche der Arbeitsplatte 11 und dem Oberrand 25 der Rückwand 18 schmale Spalte 27 (Figur 2) bzw. zwischen Tragplatte 12 und Rückwand 18 schmale Spalte 31 (Figur 3), welche eine Breite von ca. 3 mm, d.h. entsprechend der Materialdicke des Flachstückes 17' bzw. des Winkelstücks 17" haben. Diese Spalte 27, 31 ist von der Vorderseite des Möbels her jedoch kaum sichtbar.

Erfindungsgemäß wird nun der zwischen Arbeitsplatte 11 und Rückwand 18 vorhandene schmale Spalt 27 dazu ausgenutzt, den Schubladenkorpus 28 im hinteren Bereich zu befestigen.

Zu diesem Zweck sind gemäß den Figuren 2 und 5 an der Rückseite des Schubladenkorpus 28 nebeneinander und oben zwei erfindungsgemäße Befestigungselemente 17 befestigt, deren Winkelstücke 17" sich paßgenau in den Spalt 27 erstrecken, so daß einerseits der Schubladenkorpus 28 im hinteren Bereich von der Rückwand 18 getragen wird und andererseits die den Spalt 27 passenden Winkelstücke 17" den sich zwischen den Tragplatten 12 erstreckenden Bereich der Arbeitsplatte 11 abstützen, so daß eine etwaige Durchbiegung reduziert wird.

Aufgrund der Rückseitenbefestigung des Schubladenkorpus 28 gemäß der Erfindung kann man sich damit begnügen, den Schubladenkorpus 28 im vorderen Bereich nur beidseits an der vorderen Schwalbenschwanznut 30 (Figur 1) der Arbeitsplatte 11 festzulegen.

Wie man in Figur 2 erkennt, ist die Rückwand 18 an beiden Seiten mit der Arbeitsplatte 11 bzw. Tragplatte 12 bündig.

Die geringste Rückwandhöhe soll ca. 30 cm betragen. Die Rückwand 18 kann sich jedoch nach unten so weit erstrecken, wie das aus optischen oder auch Gründen der Vermeidung des Eindringens von Schmutz oder Feuchtigkeit gewünscht ist.

Die Befestigung eines Einbauteils 28 gemäß den Figuren 2 und 5 ist besonders dann von Vorteil, wenn die hintere Längsnut 30 (Figur 1) der Arbeitsplatte 11 beispielsweise deswegen entfallen muß, weil dort ein Ausschnitt für einen Herdeinsatz oder dergleichen vorgesehen ist.

Während die Rückwand 18 auch im Bereich der unteren Befestigungselemente 17 mittels in die Rückwand-Befestigungsbohrungen 23 eingeführter Befestigungsschrauben 21 befestigt werden kann, ist es auch möglich, durch in den Winkelstücken 17" vorgesehene Stirnseiten-Befestigungsbohrungen 24 hindurch Befestigungsschrauben 21 (Figur 2) in den Unterrand 26 der Rückwand 18 einzuschrauben. Durch in die Stirnseiten-Befestigungsbohrungen 24 eingeführte Schrauben 21 wird auch das untere Befestigungselement 17 des Schubladenkorpus 28 am Unterrand 26 festgelegt werden.

Der Abstand und die Anordnung der Gleitstein-Befestigungsbohrungen 22 sollen so sein, daß beim Vorsehen von drei nebeneinander angeordneten Bohrungen 22 gemäß den Figuren 6 bis 8 das Befestigungselement 17 sowohl in einer nach beiden Seiten vorstehenden Anordnung als auch über eine der beiden End-Gleitstein-Befestigungsbohrungen 26 so befestigt werden kann, daß das Befestigungselement 17 sich nur entweder von der einen oder der anderen Seite der Tragplatte 12 weg erstreckt und mit der anderen Seite bündig ist.

### Bezugszeichenliste

- 11: Arbeitsplatte
- 12: Tragplatte
- 13: Boden
- 14: Vorderseite
- 15: Rückseite
- 16: Schienenprofil (Schwalbenschwanznut)
- 17: Befestigungselement
- 17': Flachstück
- 17": Winkelstück
- 18: Rückwand
- 18': Rückwand
- 19: Gleitstein
- 20: Befestigungsschraube
- 21: Befestigungsschraube
- 22: Gleitstein-Befestigungsbohrung
- 23: Rückwand-Befestigungsbohrung
- 24: Stirnseiten-Befestigungsbohrung
- 25: Oberrand
- 26: Unterrand
- 27: Spalt
- 28: Schubladenkorpus
- 29: Gewindebohrung
- 30: Schwalbenschwanznut
- 31: Spalt

## Patentansprüche

1. Möbel, insbesondere Küchenmöbel, mit wenigstens einer zumindest im wesentlichen horizontalen, insbesondere rechteckigen Platte (11), insbesondere Arbeitsplatte, mit einer Vorderseite (14) und einer Rückseite (15), welche über zumindest zwei seitliche, vorzugsweise parallel im Abstand zueinander und zumindest im wesentlichen vertikal angeordnete Tragplatten (12) auf einer Unterlage (13), insbesondere einem Boden, ruht, wobei die Tragplatten (12) an ihrer Rückseite ein parallel zur Längsseite der Rückseite, d.h. zumindest im wesentlichen vertikal verlaufendes Schienenprofil (16) aufweisen, an bzw. in dem wenigstens ein Befestigungselement (17) höhenverstellbar und insbesondere lösbar angebracht ist,
**dadurch gekennzeichnet,**
**dass** das Befestigungselement (17) zumindest auf einer Seite über die Tragplatte (12) vorsteht und dass an dessen seitlich über die Tragplatte (12) vorstehendem Teil eine Rückwand (18) befestigt ist, wobei vorzugsweise an jeder Tragplatte (12) zwei Befestigungselemente (17) im Abstand übereinander vorgesehen sind und das obere Befestigungselement (17) vorzugsweise oben an die Platte (11) anstößt, während das untere Befestigungselement (17) am unteren Ende der Rückwand (18) angeordnet ist.

2. Möbel nach Anspruch 1,
**dadurch gekennzeichnet,**
**daß** das Schienenprofil eine hinterschnittene Nut (16), insbesondere mit Schwalbenschwanzprofil ist, in dem für jedes Befestigungselement (17) zumindest ein Gleitstein (19) angeordnet ist, an dem das Befestigungselement (17) derart anschraubbar ist, daß es zunächst auf eine gewünschte Höhe eingestellt werden und dann durch Festziehen einer Befestigungsschraube (20) in dieser Höhe an der Tragplatte (12) festgelegt werden kann.

3. Möbel nach Anspruch 1 oder 2,
**dadurch gekennzeichnet,**
**daß** das Befestigungselement (17) ein sich parallel zur Rückwand (18) erstreckendes, vorzugsweise senkrecht zur Tragplatte (12) längliches Flachstück (17') aufweist.

4. Möbel nach Anspruch 3,
**dadurch gekennzeichnet,**
**daß** das Flachstück (17') flach an der hinteren Stirnseite der Tragplatte (12) anliegt.

5. Möbel nach Anspruch 3 oder 4,
**dadurch gekennzeichnet,**
**daß** an dem Flachstück (17') von hinten die Rückwand (18) anliegt und das Flachstück (17') von vorne her z.B. durch Schrauben (21) mit der Rückwand (18) verbunden ist.

6. Möbel nach einem der Ansprüche 3 bis 5,
**dadurch gekennzeichnet,**
**daß** an dem Flachstück (17') ein vorzugsweise um 90° nach hinten abgebogenes Winkelstück (17'') vorzugsweise gleicher Länge vorgesehen ist.

7. Möbel nach Anspruch 6,
**dadurch gekennzeichnet,**
**daß** das Winkelstück (17") eine Tiefe entsprechend der Dicke der Rückwand (18) hat.

8. Möbel nach einem der vorhergehenden Ansprüche,
**dadurch gekennzeichnet,**
**daß** für die Rückwand (18) an jeder Tragplatte (12) zwei im Abstand der Höhe der Rückwand (18) angeordnete Befestigungselemente (17) vorgesehen sind, und daß die Winkelstücke (17'') oben bzw. unten an der Rückwand (18) anliegen und die Flachstücke (17') der beiden Befestigungselemente (17) aufeinander zu weisen, wobei das obere Winkelstück (17'') bevorzugt von unten an der Platte (11) anliegt.

9. Möbel nach einem der vorhergehenden Ansprüche,
**dadurch gekennzeichnet,**
**daß** das Befestigungselement (17) über die gesamte Breite an der Rückseite der Tragplatte (12) an dieser anliegt.

10. Möbel nach einem der vorhergehenden Ansprüche,
**dadurch gekennzeichnet,**
**daß** das Befestigungselement nur von einer Seite oder von beiden Seiten der Tragplatte zur Befestigung einer Rückwand (18) bzw. zweier Rückwände (18, 18') vorsteht.

11. Möbel nach einem der Ansprüche 3 bis 10,
**dadurch gekennzeichnet,**
**daß** das Flachstück (17') Gleitstein-Befestigungsbohrungen (22) und Rückwand-Befestigungsbohrungen (23) aufweist.

12. Möbel nach Anspruch 11,
**dadurch gekennzeichnet,**
**daß** die Gleitstein-Befestigungsbohrungen (22) und die Rückwand-Befestigungsbohrungen (23) in zwei zumindest im wesentlichen horizontalen Reihen übereinander angeordnet sind, wobei die Gleitstein-Befestigungsbohrungen (22) näher am Winkelstück (17'') als die Rückwand-Befestigungsbohrungen (23) liegen.

13. Möbel nach Anspruch 11 oder 12,
**dadurch gekennzeichnet,**
**daß** in Längsrichtung des Befestigungselementes (17) ein bis fünf, vorzugsweise zwei bis vier und insbesondere drei Gleitstein-Befestigungsbohrungen (22) vorzugsweise in gleichem Abstand angeordnet sind.

14. Möbel nach einem der Ansprüche 11 bis 13,
**dadurch gekennzeichnet,**
**daß** vier bis zehn, insbesondere fünf bis acht und bevorzugt sechs Rückwand-Befestigungsbohrungen (23) vorzugsweise im gleichen Abstand in Längsrichtung des Befestigungselementes (17) vorgesehen sind.

15. Möbel nach einem der Ansprüche 6 bis 14,
**dadurch gekennzeichnet,**
**daß** am Winkelstück (17") mindestens eine Stirnseiten-Befestigungsbohrung (24) vorgesehen ist.

16. Möbel nach Anspruch 15,
**dadurch gekennzeichnet,**
**daß** ein bis fünf, vorzugsweise zwei bis vier und insbesondere drei Stirnseiten-Befestigungsbohrungen (24) vorzugsweise im gleichen Abstand in Längsrichtung des Winkelstückes (17'') vorgesehen sind.

17. Möbel nach einem der Ansprüche 6 bis 16,
**dadurch gekennzeichnet,**
**daß** das Flachstück um einen Faktor 1,5 bis 2,5, insbesondere etwa 2 breiter als das Winkelstück (17'') ist.

18. Möbel nach einem der vorhergehenden Ansprüche,
**dadurch gekennzeichnet,**
**daß** die Bohrungen (22, 23, 24) Senkbohrungen für Senkkopfschrauben sind, wobei die Senkungen der Gleitstein-Befestigungsbohrungen (22) auf der Rückseite, die Senkungen der Rückwand-Befestigungsbohrungen (23) auf der Vorderseite des Flachstücks (17') und die Senkungen der Stirnseiten-Befestigungsbohrungen (24) in der vom Flachstück (17') abgewandten Oberfläche des Winkelstücks (17") vorgesehen sind.

19. Möbel nach einem der vorhergehenden Ansprüche,
**dadurch gekennzeichnet,**
**daß** der Oberrand (25) und/oder der Unterrand (26) der Rückwand (18) durchgehend horizontal verläuft.

20. Möbel nach Anspruch 19,
**dadurch gekennzeichnet,**
**daß** in den durch das oberhalb der Rückwand (18) befindliche, von unten an der Platte (11) anliegende Winkelstück (17") bedingten Spalt (27) zwischen dem Oberrand (25) der Rückwand (18) und der Unterseite der Platte (11) zumindest an einer Stelle zwischen zwei benachbarten Befestigungselementen (17) ein Winkelstück (17'') eines weiteren, gleichartigen Befestigungselementes (17) eingreift, welches an der Rückseite eines Einbauteils (28) des Möbels befestigt ist.

21. Möbel nach Anspruch 20,
**dadurch gekennzeichnet,**
**daß** an der Rückwand des Einbauteils, insbesondere eines Schubladenkorpus (28) ein bzw. in seitlichem Abstand zwei Flachstücke (17'') derart befestigt sind, daß beim Einsetzen des Einbauteils in das Möbel das bzw. die nach hinten vorstehende Winkelstücke (17") in den Spalt (27) greift bzw. greifen.

## Claims

1. A piece of furniture, in particular kitchen furniture having at least one at least substantially horizontal and in particular rectangular panel (11), in particular a working surface, having a front side (14) and a rear side (15) which rests via at least two lateral support plates (12) which are preferably arranged parallel to one another and at least substantially vertically on a support (13), in particular a floor, with the support plates (12) having at their rear side a profiled rail (16) extending parallel to the longitudinal side of the rear side, i.e. at least substantially vertically on which or in which at least one attachment element (17) is vertically adjustably and in particular releasably attached,
**characterized in that**
the attachment element (17) projects at at least one side beyond the support plate (12) and **in that** a rear wall (18) is secured to its part projecting sidewise beyond the support plate (12), with two attachment elements (17) preferably being provided at a distance above one another on each support plate (12) and with the upper attachment element (17) preferably abutting at the top against the panel (11) whereas the lower attachment element (17) is arranged at the lower end of the rear wall (18).

2. A piece of furniture in accordance with claim 1,
**characterized in that**
the profiled rail has an undercut groove (16), in particular with a dovetail profile, in which at least one sliding member (19) is provided for each attachment element (17), with it being possible to screw the attachment element (17) onto the sliding member in such a way that it can first be set at a desired height and can then be fixed at this height to the support plate (12) by tightening a fastening screw (20).

3. A piece of furniture in accordance with claim 1 or claim 2,
**characterized in that**
the attachment element (17) has an elongate flat piece (17') extending parallel to the rear wall (18), preferably perpendicular to the support plate (12).

4. A piece of furniture in accordance with claim 3,
**characterized in that**
the flat piece (17') flatly contacts the rear end face of the support plate (12).

5. A piece of furniture in accordance with claim 3 or claim 4,
**characterized in that**
the rear wall (18) contacts the flat piece (17') from the rear and the flat piece (17') is connected from the front to the rear wall (18), for example by screws (21).

6. A piece of furniture in accordance with any one of the claims 3 to 5,
**characterized in that**
an angle piece (17") bent to the rear, preferably through 90°, is provided on the flat piece (17') and is preferably of the same length.

7. A piece of furniture in accordance with claim 6,
**characterized in that**
the angle piece (17") has a depth corresponding to the thickness of the rear wall (18).

8. A piece of furniture in accordance with any one of the preceding claims,
**characterized in that**
two attachment elements (17) arranged spaced by the height of the rear wall (18) are provided for the rear wall (18) at each support plate (12) and **in that** the angle pieces (17") contact the rear wall (18) at the top and at the bottom and the flat pieces (17') of the two attachment elements (17) face one another, with the upper angle piece (17") preferably contacting the panel (11) from below.

9. A piece of furniture in accordance with any one of the preceding claims,
**characterized in that**
the attachment element (17) contacts the rear side of the support plate (12) over the entire width.

10. A piece of furniture in accordance with any one of the preceding claims,
**characterized in that**
the attachment element projects only from one side or from both sides of the support plate for the attachment of a rear wall (18) or of two rear walls (18, 18').

11. A piece of furniture in accordance with any one of the claims 3 to 10,
**characterized in that**
the flat piece (17') has attachment bores (22) for sliding members and attachment bores (23) for the rear wall.

12. A piece of furniture in accordance with claim 11,
**characterized in that**
the sliding member attachment bores (22) and the rear wall attachment bores (23) are arranged above one another in two at least substantially horizontal rows, with the sliding member attachment bores (22) lying closer to the angle piece (17") than the rear wall attachment bores (23).

13. A piece of furniture in accordance with claim 11 or claim 12,
**characterized in that**
from one to five, preferably from two to four and in particular three sliding member attachment bores (22) are arranged in the longitudinal direction of the attachment element (17) , preferably at the same spacing.

14. A piece of furniture in accordance with any one of the claims 11 to 13,
**characterized in that**
from four to ten and in particular from five to eight and preferably six rear wall attachment bores (23) are provided in the longitudinal direction of the attachment element (17) , preferably at the same spacing.

15. A piece of furniture in accordance with any one of the claims 6 to 14,
**characterized in that**
at least one end face attachment bore (24) is provided at the angled piece (17").

16. A piece of furniture in accordance with claim 15,
**characterized in that**
from one to five, preferably from two to four and in particular three end face attachment bores (24) are provided in the longitudinal direction of the angle piece (17"), preferably at the same spacing.

17. A piece of furniture in accordance with any one of the claims 6 to 16,
**characterized in that**
the flat piece is broader than the angle piece (17") by a factor from 1.5 to 2.5, in particular by a factor of approximately 2.

18. A piece of furniture in accordance with any one of the preceding claims,
**characterized in that**
the bores (22, 23, 24) are countersunk bores for countersunk screw heads, with the countersinks of the sliding member attachment bores (22) at the rear side, the countersinks of the rear wall attachment bores (23) at the front side of the flat piece (17') and the countersinks of the end face attachment bores (24) being provided in the surface of the angle piece (17") remote from the flat piece (17').

19. A piece of furniture in accordance with any one of the preceding claims,
**characterized in that**
the upper edge (25) and/or the lower edge (26) of the rear wall (18) extends continuously horizontally.

20. A piece of furniture in accordance with claim 19,
**characterized in that**
an angle piece (17") of a further like attachment element (17) engages into the gap (27) between the upper edge (25) of the rear wall (18) and the lower side of the panel (11) caused by the angle piece (17") located above the rear wall (18) and contacting the panel (11) from below, at least at one position between two adjacent attachment elements (17), and is secured to the rear side of an inbuilt part (28) of the piece of furniture.

21. A piece of furniture in accordance with claim 20,
**characterized in that**
one flat piece or two laterally spaced apart flat pieces (17") are secured to the rear wall of the inbuilt part, in particular of a drawer body (28), in such a way that on inserting the inbuilt part into the piece of furniture the angle piece or angle pieces (17") projecting rearwardly engages or engage into the gap (27).

## Revendications

1. Meuble, en particulier meuble de cuisine, comportant au moins un panneau (11) au moins sensiblement horizontal, en particulier rectangulaire, notamment un plan de travail, avec une face avant (14) et avec une face arrière (15) qui repose sur un support (13), en particulier sur un sol, par au moins deux plaques porteuses latérales (12) agencées de préférence parallèlement à distance l'une de l'autre et au moins sensiblement verticalement, les plaques porteuses (12) présentant sur leur côté arrière un profil formant rail (16) s'étendant parallèlement au côté longitudinal de la face arrière, c'est-à-dire au moins sensiblement verticalement, profil sur lequel ou dans lequel est agencé au moins un élément de fixation (17) réglable en hauteur et en particulier détachable,
**caractérisé en ce que**
l'élément de fixation (17) dépasse sur au moins un côté au-delà de la plaque porteuse (12) et **en ce qu'**une paroi arrière (18) est fixée sur sa partie dépassant latéralement au-delà de la plaque porteuse (12), de préférence au moins deux éléments de fixation (17) étant prévus à distance l'un au-dessus de l'autre sur chaque plaque porteuse (12), et l'élément de fixation supérieur (17) vient buter de préférence en haut contre le panneau (11), tandis que l'élément de fixation inférieur (17) est agencé à l'extrémité inférieure de la paroi arrière (18).

2. Meuble selon la revendication 1, **caractérisé en ce que** le profil formant rail est une gorge en contre-dépouille (16), en particulier avec profil en queue d'aronde, dans laquelle est agencé au moins un coulisseau (19) pour chaque élément de fixation (17), coulisseau sur lequel l'élément de fixation (17) peut être vissé de manière à pouvoir être réglé tout d'abord à une hauteur désirée et ensuite être immobilisé à cette hauteur sur la plaque porteuse (12) par serrage d'une vis de fixation (20).

3. Meuble selon l'une ou l'autre des revendications 1 et 2, **caractérisé en ce que** l'élément de fixation (17) est un élément plat allongé (17') qui s'étend parallèlement à la paroi arrière (18) et de préférence perpendiculairement à la plaque porteuse (12).

4. Meuble selon la revendication 3, **caractérisé en ce que** l'élément plat (17') prend appui à plat contre la face frontale arrière de la plaque porteuse (12).

5. Meuble selon l'une ou l'autre des revendications 3 et 4, **caractérisé en ce que** la paroi arrière (18) prend appui depuis l'arrière contre l'élément plat (17'), et l'élément plat (17') est relié à la paroi arrière (18) depuis le devant par exemple par des vis (21).

6. Meuble selon l'une des revendications 3 à 5, **caractérisé en ce qu'**il est prévu sur l'élément plat (17') une cornière (17") qui est coudée de préférence de 90° vers l'arrière et qui présente de préférence la même longueur.

7. Meuble selon la revendication 6, **caractérisé en ce que** la cornière (17") présente une profondeur correspondante à l'épaisseur de la paroi arrière (18).

8. Meuble selon l'une des revendications précédentes, **caractérisé en ce qu'**il est prévu pour la paroi arrière (18) deux éléments de fixation (17) agencés à une distance égale à la hauteur de la paroi arrière (18) sur chaque plaque porteuse (12), et **en ce que** les cornières (17") prennent appui en haut ou en bas contre la paroi arrière (18) et les éléments plats (17') des deux éléments de fixation (17) sont dirigés l'un vers l'autre, la cornière supérieure (17") prenant appui de préférence depuis le bas contre le panneau (11).

9. Meuble selon l'une des revendications précédentes, **caractérisé en ce que** l'élément de fixation (17) prend appui contre la face arrière de la plaque porteuse (12) sur toute la largeur de celle-ci.

10. Meuble selon l'une des revendications précédentes, **caractérisé en ce que** l'élément de fixation dépasse uniquement depuis un côté ou depuis les deux côtés de la plaque porteuse pour fixer une paroi arrière (18) ou deux parois arrières (18, 18').

11. Meuble selon l'une des revendications 3 à 10, **caractérisé en ce que** l'élément plat (17') présente des perçages de fixation de coulisseau (22) et des perçages de fixation de paroi arrière (23).

12. Meuble selon la revendication 11, **caractérisé en ce que** les perçages de fixation de coulisseau (22) et les perçages de fixation de paroi arrière (23) sont ménagés les uns au-dessus des autres en deux rangées au moins sensiblement horizontales, les perçages de fixation de coulisseau (22) étant plus proches de la cornière (17") que les perçages de fixation de paroi arrière (23).

13. Meuble selon l'une ou l'autre des revendications 11 et 12,
**caractérisé en ce qu'**en direction longitudinale de l'élément de fixation (17) sont prévus un à cinq, de préférence deux à quatre et en particulier trois perçages de fixation de coulisseau (22) de préférence de façon équidistante.

14. Meuble selon l'une des revendications 11 à 13, **caractérisé en ce qu'**en direction longitudinale de l'élément de fixation (17) sont prévus quatre à dix, en particulier cinq à huit et de préférence six perçages de fixation de paroi arrière (23) de préférence de façon équidistante.

15. Meuble selon l'une des revendications 6 à 14, **caractérisé en ce qu'**il est prévu au moins un perçage de fixation de face frontale (24) sur la cornière (17").

16. Meuble selon la revendication 15, **caractérisé en ce qu'**en direction longitudinale de la cornière (17") sont prévus un à cinq, de préférence deux à quatre et en particulier trois perçages de fixation de face frontale (24) de préférence de façon équidistante.

17. Meuble selon l'une des revendications 6 à 16, **caractérisé en ce que** l'élément plat est plus large que la cornière (17") d'un facteur de 1,5 à 2,5, en particulier d'environ 2.

18. Meuble selon l'une des revendications précédentes, **caractérisé en ce que** les perçages (22, 23, 24) sont des perçages à lamage pour des vis à tête conique, les lamages des perçages de fixation de coulisseau (22) étant prévus sur la face arrière, les lamages des perçages de fixation de paroi arrière (23) étant prévus sur la face avant de l'élément plat (17') et les lamages des perçages de fixation de face frontale (24) étant prévus dans la surface de la cornière (17") détournée de l'élément plat (17').

19. Meuble selon l'une des revendications précédentes, **caractérisé en ce que** le bord supérieur (25) et/ou le bord inférieur (26) de la paroi arrière (18) s'étend en continu horizontalement.

20. Meuble selon la revendication 19, **caractérisé en ce que** dans l'intervalle (27), qui est dû à la cornière (17") située au-dessus de la paroi arrière (18) et appuyée depuis le bas contre le panneau (11) et qui est formé entre le bord supérieur (25) de la paroi arrière (18) et la face inférieure du panneau (11), une cornière (17") d'un autre élément de fixation (17) de même type s'engage à au moins un emplacement entre deux éléments de fixation voisins (17), élément qui est fixé sur la face arrière d'une pièce structurelle (28) du meuble.

21. Meuble selon la revendication 20, **caractérisé en ce qu'**un ou deux éléments plats (17") sont fixés à distance latérale sur la paroi arrière de la pièce structurelle, en particulier d'un corps de tiroir (28), de telle sorte que lors de la mise en place de la pièce structurelle dans le meuble la ou les cornières (17") dépassant vers l'arrière vient ou viennent s'engager dans l'intervalle (27).
